# DEMANDE DE BREVET EUROPEEN

(11) **EP 2 302 871 A1**
(43) Date de publication de la demande: **30.03.2011**
(21) Numéro de dépôt: 10179485.7
(22) Date de dépôt: 24.09.2010
(51) Int. Cl.: H04L 29/08

(54) **Procédé et système de publication de services numeriques dans un réseau de communications mobiles**

(30) Priorité: 28.09.2009 FR 0904624
(71) Demandeur: Alcatel Lucent, 75007 Paris (FR)
(72) Inventeur: Joubert, Eric, 91620 Nozay (FR); Lu, Monique, 91620 Nozay (FR); Poussiere, Fabrice, 91620 Nozay (FR)
(74) Mandataire: Raets, David

(57) **Abrégé**

Procédé de publication dans un réseau de communications mobiles (1) d'au moins un service numérique disponible sur un réseau Internet (2) et accessible par un URL Web depuis un terminal mobile (4) connecté au dit réseau de communications mobiles (1), ce procédé comprenant les étapes suivantes :
- réception en mode circuit, par le terminal mobile (4), d'un URL Radio, préalablement associé à l'URL Web et qui lui est transmis via le réseau de communications mobiles (1);
- requête, par le terminal mobile (4), de l'URL Web correspondant à l'URL Radio qui lui est transmis;
- réception en mode circuit, par le terminal mobile (4), de l'URL Web qui lui est transmis via le réseau de communications mobiles (1).

## Description

La présente invention se rapporte aux techniques de publication des services numériques destinés aux utilisateurs des terminaux mobiles connectés à un réseau de communications mobiles, de préférence un réseau de téléphonie mobile.

On entend ici par « Internet » ou « réseau Internet » tout réseau informatique dans lequel les échanges de données s'effectuent selon un protocole du type Internet tels que le réseau Internet proprement dit ou les réseaux privés d'entreprises, du types « Intranet », ou « Extranet ».

Par ailleurs, on désigne ici par « terminal mobile » tout équipement utilisateur permettant de se connecter à un réseau de communications mobiles, tels qu'un téléphone portable ou un PDA (Personal Digital Assistant). Un terminal mobile peut être un téléphone portatif ou un terminal plus complexe, par exemple un terminal cumulant les fonctionnalités de téléphone et d'organiseur. Le terminal mobile est aussi appelé, selon d'autres terminologies, la station mobile ou l'équipement mobile.

Il est à noter que l'expression « réseau de communications mobiles» désigne ici tout Réseau Terrestre Mobile Public de Communications (ou en anglais Public Land Mobile Network) du type des réseaux GSM, CDMA, UMTS ou LTE.

Il est notoire que le terminal mobile est devenu une vraie nécessité de la vie quotidienne, non seulement pour ses capacités de communications mais aussi comme un portail à des services accessibles sur Internet, dits services numériques. En effet, les opérateurs réseau ainsi que des fournisseurs de services proposent de plus en plus de services capables d'intéresser de nombreux utilisateurs en des lieux et des moments particuliers. A titre d'exemples illustratifs de services numériques destinés aux utilisateurs des terminaux mobiles capables d'accéder aux serveurs Internet de ces services, on peut citer les services concernant
- les actualités (le journal télévisé, la bourse, les résultats des rencontres sportives par exemple);
- la météo régionale;
- les informations bancaires (consultation du compte, opérations de transaction par exemptes);
- les divertissements (jeux en ligne, services de rencontre, chat, informations sur les lieux de divertissement dans une zone géographique: prix, heures d'ouverture, activités par exempte);
- le commerce (achat à distance, promotion, réservation par exemptes);
- les informations touristiques (plan de la ville, adresses des sites touristiques, information sur une région par exemple) ;
- informations et services divers: traduction, annuaires, pages jaunes, horaires de transports, trafic routier par exemple.

L'évolution des caractéristiques des terminaux mobiles qui permettent l'accès à Internet et le développement de la communication par paquets ne font que soutenir la prolifération de tels services numériques.

La publication d'un service numérique via un réseau de communications mobiles correspond, généralement, à la diffusion de messages SMS (Short Message Service), EMS (Enhanced Message Service) ou MMS (Multimedia Message Service). Le message diffusé permet aux clients d'être informés de la disponibilité d'un certain service supporté par le réseau de communications mobiles auquel ils sont connectés.

Le message diffusé est souvent un message SMS comprenant des informations présentant un service numérique et pouvant mentionner un URL (Uniform Resource Locator) qui pointe vers le serveur Internet de ce service. Un URL est une adresse Web permettant de désigner une ressource sur Internet.

Cependant, le message SMS diffusé
- ne peut véhiculer qu'un nombre très limité (140 octets) de caractères, alors qu'une adresse Web comprend, généralement, un grand nombre de caractères, rendant difficile la publication d'un service électronique en un seul SMS ;
- est généralement associé, au vu de l'utilisateur du terminal mobile, à un message indésirable (SPAM) qui sera automatiquement ignoré, voire bloqué.

L'utilisateur du terminal mobile est parfois aussi contraint de saisir un URL pour accéder au site Web d'un certain service alors que les claviers des terminaux mobiles sont usuellement peu pratiques pour effectuer de telles saisies. Un URL comprend généralement beaucoup de caractères et particulièrement des symboles de ponctuation tels que /, : , . , -, _ , ?, !, =, ou & par exemple.

La communication en mode paquet permet la transmission des données associées à un service qui nécessiterait un grand nombre de messages SMS pour être transmis. Cependant, un terminal mobile est, par défaut, connecté au réseau de communications mobiles en mode circuit où il est en écoute continue des canaux habituels pour recevoir un appel ou un message. Dans ce cas, si un utilisateur est connecté à un réseau de communications mobiles depuis une zone pour laquelle il ne connaît pas les services numériques proposés susceptibles de l'intéresser, il est contraint de se connecter en mode paquet pour effectuer une requête Web et rechercher ces services, par exemple, sur le site Internet de l'opérateur réseau ou à partir d'autres sites Web. Il lui est, aussi, difficile de se rendre compte de la disponibilité d'autres services numériques qu'il ignore.

Un objet de la présente invention est de remédier aux inconvénients précités.

Un autre objet de la présente invention est d'améliorer l'efficacité de la publication des services numériques auprès des utilisateurs des terminaux mobiles.

Un autre objet de la présente invention est de proposer une publication ciblée des services numériques.

Un autre objet de la présente invention est de proposer un protocole d'adressage dans un réseau de communications mobiles.

Un autre objet de la présente invention est de favoriser la navigation Internet via les terminaux mobiles.

Un autre objet de la présente invention est de simplifier la diffusion des adresses Web des services numériques destinés aux terminaux mobiles.

Un autre objet de la présente invention est d'améliorer la qualité de service rendu par un opérateur de réseau à ses abonnés.

À cet effet, l'invention propose, suivant un premier aspect, un procédé de publication dans un réseau de communications mobiles d'au moins un service numérique disponible sur un réseau Internet et accessible par un URL Web depuis un terminal mobile connecté au dit réseau de communications mobiles, ce procédé comprenant les étapes suivantes :
- réception en mode circuit, par le terminal mobile, d'un URL Radio, préalablement associé à l'URL Web et qui lui est transmis via le réseau de communications mobiles;
- requête, par le terminal mobile, de l'URL Web correspondant à l'URL Radio qui lui est transmis;
- réception en mode circuit, par le terminal mobile, de l'URL Web qui lui est transmis via le réseau de communications mobiles.

L'invention propose, selon un deuxième aspect, un système de publication dans un réseau de communications mobiles d'au moins un service numérique disponible sur un réseau Internet et accessible par un URL Web depuis un terminal mobile connecté au dit réseau de communications mobiles, ce système comprenant:
- un serveur d'association d'un URL Radio à l'URL Web du service numérique;
- des moyens de transmission en mode circuit, au terminal mobile, de l'URL Radio;
- des moyens de transmission en mode circuit, de l'URL Web requis par un terminal mobile qui a reçu l'URL Radio associé.

L'invention se rapporte, selon un troisième aspect, à un terminal mobile comprenant
- des moyens de réception en mode circuit d'un URL Radio qui lui est transmis via un réseau de communications mobiles ;
- des moyens de requête d'un URL Web correspondant à l'URL Radio reçu;
- des moyens de réception en mode circuit d'un URL Web requis.

L'invention propose, selon un quatrième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, laquelle est faite en référence aux dessins annexés dans lesquels,
- la figure 1 est un schéma montrant une architecture réseau pour la mise en oeuvre d'un procédé de publication de services numériques ;
- la figure 2 est un graphique montrant différentes étapes du procédé de publication.

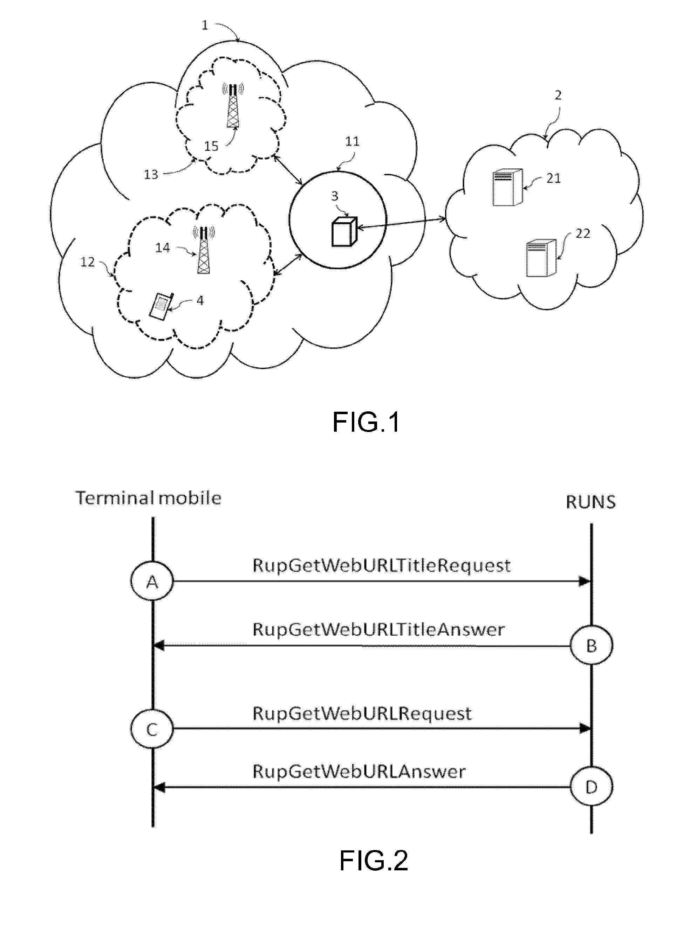

Sur la figure 1 sont représentés deux réseaux, à savoir un réseau de communications mobiles 1 et un réseau Internet 2. Un réseau GSM, GRRS, CDMA, UMTS ou plus généralement un Réseau Terrestre Mobile Public de communications sont des exemples du réseau de communications mobiles 1.

Le réseau de communications mobiles 1 comprend un réseau central 11 (notamment « Core Network » en anglais) et un ou plusieurs réseaux d'accès radio 12, 13 (« Radio Access Network » en anglais). Le réseau central 11 comprend divers systèmes qui peuvent offrir divers services numériques en plus des possibilités basiques de communication. Les réseaux d'accès radio 12, 13 se situent entre le réseau central 11 et les terminaux mobiles 4. Un réseau d'accès radio comprend des stations d'émission/réception 14, 15 et des contrôleurs de réseau radio (non représentés sur la figure 1) ayant des connexions fixes au réseau central 11.

Notamment, le terminal mobile 4 permet une connexion en mode circuit et une connexion en mode paquet (WAP et/ou GPRS par exemples) au réseau de communications mobiles 1. Entre le terminal mobile 4 et le réseau central 11 peuvent agir un ou plusieurs réseaux d'accès radio 12, 13 et par l'intermédiaire d'un réseau d'accès radio donné, un terminal mobile 4 peut être connecté à plusieurs réseaux centraux 11.

Tel qu'il est illustré sur la figure 1, un réseau d'accès radio 12, 13 possède une zone de couverture dans laquelle un service numérique peut être publié.

Le réseau Internet 2 comprend des serveurs de service 21, 22, aussi appelés «serveurs Internet», hébergeant des « sites Web » qui proposent des services numériques. Les services numériques hébergés par les serveurs de service 21, 22 sont accessibles depuis tout terminal utilisateur connecté au réseau Internet 2 et apte à afficher leurs contenus. Le serveur de service 21 , 22 propose, à titre d'exemples illustratifs,
- des informations concernant la météo des zones de couverture des réseaux d'accès radio 12, 13 ;
- des informations (plan d'accès, heures d'ouverture, photos par exemples) concernant un site touristique situé dans la zone de couverture du réseau d'accès radio 12 ;
- les actualités dans la zone de couverture du réseau d'accès radio 13 ; ou
- des services de réservation/paiement (taxi, location de voiture, billets de spectacles ou de train par exemples) dans la zone de couverture du réseau d'accès radio 12, 13.

Le réseau central 11 est programmé pour contrôler la publication, via les réseaux d'accès 12, 13, des services numériques supportés par les serveurs de service 21, 22. Pour cela, le réseau central 11 dispose des paramètres de publication, à destination des terminaux mobiles 4 auquel ils sont connectés, des services numériques supportés par les serveurs de service 21, 22. A titre d'exemples, ces paramètres définissent pour un (ou un groupe de) service(s) numérique(s)
- le (ou les) réseau(x) d'accès radio 12, 13 dans le(s)quel(s) il sera diffusé (ils seront diffusés);
- la périodicité ou la fréquence de diffusion;
- les horaires et/ou la période de diffusion; et
- le contenu à diffuser.

Selon un mode de réalisation, un service numérique est diffusé, en fonction de ses paramètres de publication, dans des notifications des services à l'intention des utilisateurs des terminaux mobiles. Le réseau central 11 fait parvenir automatiquement aux utilisateurs des terminaux mobiles 4, via les réseaux d'accès 12, 13, les services numériques proposés dans leurs zones de couverture respectives.

Selon un mode de réalisation, une notification de service numérique est diffusé sur l'interface radio en mode circuit, via un canal qui lui dédié afin de d'éviter la surcharge des canaux communs. A titre d'exemple, dans le standard « GSM phase 2 », les notifications de services numériques peuvent être diffusées sur le canal de notification (ou NCH, pour Notification Channel en anglais). Ce canal NCH peut être placé, par exemple, dans le canal logique de contrôle commun AGCH.

Selon un autre mode de réalisation, la diffusion des notifications de services numériques s'effectue en mode circuit via les canaux Radio communs (tel que le canal BCCH dans un réseau de communications mobile GSM ou UMTS) ou via d'autres moyens de diffusion cellulaire (Cell Broadcast Services).

Un module logiciel inclus dans le terminal mobile 4 se charge de la gestion des notifications des services numériques reçues. Le module logiciel permet, par exemple,
- de récolter les indications de services diffusées dans la zone où se trouve le terminal mobile 4 ;
- d'avertir l'utilisateur, selon des données de configuration prédéfinies, de la réception d'une notification de service numérique (effet sonore et/ou visuelle ou aucune action par exemples);
- d'afficher les notifications des services numériques reçues;
- de proposer via une interaction simple (selon les types de terminaux, un clic, ou l'appui d'une touche par exemple) l'abandon, l'ajout aux favoris, l'enregistrement ou l'utilisation du contenu de la notification de service numérique.

Le module logiciel peut être configuré pour
- ignorer toute notification de service numérique en diffusion;
- ignorer toute notification de service numérique reçue depuis n secondes;
- mémoriser les notifications reçues par le terminal mobile 4 lorsque il est en veille ou lorsque une autre application sur le terminal mobile 4 est ouverte (un jeu, une communication en cours par exemple), pour les indiquer à la fermeture de cette application;
- ignorer une liste prédéfinie de notifications de services numériques (un affichage sélectif des notifications de services numériques en diffusion).

Une notification de service numérique comprend un URL Radio référençant l'URL Web qui pointe vers le service numérique disponible sur le serveur de service 21, 22 du réseau Internet 2.

La correspondance entre l'URL Radio et l'URL Web est faite par le serveur 3, dénommé ci-après RUNS (Radio URL Name Server). De préférence, le RUNS 3 est associé au centre de commutation mobile (ou MSC, pour Mobile Switching Center en anglais) du réseau central 11.

Le RUNS 3 est programmé pour associer de façon réciproque un URL Radio à l'URL Web correspondant. Autrement dit, le RUNS 3 permet d'associer une adresse Radio à une adresse Web et inversement.

Le format d'un URL Web se présente, généralement, comme suit:
WebProtocol://DomainNameAndAccesslnformation
   où
   - WebProtocol est le protocole de communication à utiliser pour accéder à une ressource sur le réseau Internet 2. http, https, ftp, smtp, pop, imap sont des exemples de WebProtocol;
   - DomainNameAndAccesslnformation correspond à l'information permettant de localiser et d'avoir accès à une ressource. DomainNameAndAccesslnformation comprend, par exemple, un nom d'utilisateur, un mot de passe, une adresse IP, un nom de domaine, un numéro de port TCP/IP, un chemin d'accès, ou une requête.

L'URL Radio a la forme suivante:
RadioProtocol://WebURLRef
   où
   - « RadioProtocol » correspond au protocole utilisé pour retrouver l'URL Web correspondant. RadioProtocol est désigné ci-après par RUP (pour Radio URL Protocol);
   - « WebURLRef » est une référence permettant d'identifier d'une manière unique l'URL Web associé. De préférence, WebURLRef est choisie d'une faible taille, voire la plus faible possible.

Afin de réduire la taille de l'URL Radio transmis sur l'interface Radio, WebURLRef peut être codé selon le format suivant:
Length-WebURLldentifier
   où
   - « Length » correspond à la longueur du WebURLRef (le nombre de caractères par exemple); et
   - « WebURLIdentifier » est un identifiant permettant d'identifier d'une manière unique l'URL Web correspondant.

« WebURLldentifier » est stocké dans le RUNS 3. Cette information peut être créée au moment de la demande, de la part du fournisseur du service numérique par exemple, d'association d'un URL Radio à l'URL Web du service numérique.

Il en résulte que l'URL Radio est comme suit:
rup://length-WebURLldentifier

Il est à noter que ce format de l'URL Radio est donné à titre illustratif et ne limite en aucun cas l'invention. Toute fonction bijective peut être utilisée afin de faire correspondre WebURLRef aux URL Web des services numériques.

En variante, l'URL Radio peut avoir l'une des formes suivantes: rup://WebURLldentifier ou rup://WebURLldentifier-length.

Avantageusement, l'URL Radio
- est transmis vers le terminal mobile 4 en mode circuit;
- définit d'une manière unique l'URL Web d'un service numérique ; et
- est codé d'une manière à simplifier sa transmission, son affichage (une taille inférieure à celle d'un URL Web), ainsi que sa saisie.

Le protocole RUP permet, en particulier,
- de découvrir l'URL Web à partir d'un URL Radio ; et
- d'échanger des informations entre un terminal mobile 4 et le RUNS 3.

Le module logiciel, embarqué sur le terminal mobile 4 et chargé de la gestion des notifications de services numériques reçues, peut être configuré pour bloquer les notifications des services numériques en diffusion et ne les afficher que suite à une requête lancée par l'utilisateur.

Sur requête utilisateur (après que celui-ci ait été notifié de la présence d'un URL-Radio) ou de sa propre initiative, le terminal mobile requiert, via le réseau d'accès radio 12 la liste des services proposés par le réseau de communications mobiles 1. En réponse, une information lui est transmise comprenant, de préférence sur des lignes différentes, les URL Radio des services numériques accessibles depuis la zone de couverture du réseau d'accès radio 12.

A la réception d'une notification de service numérique, l'utilisateur du terminal mobile 4 peut activer l'URL Radio, ce qui provoque la connexion au serveur RUNS 3.

La figure 2 illustre une session de communication entre un terminal mobile 4 est le RUNS 3 selon un mode de réalisation.

Le terminal mobile 4 peut requérir (étape A de la figure 2) des informations complémentaires concernant un URL Radio reçu. Ceci se traduit par une requête « RupGetWebURLTitleRequest » lancée par l'utilisateur, depuis son terminal mobile 4, à destination du RUNS 3. Cette requête a pour paramètre le « WebURLldentifier» compris dans l'URL Radio. En réponse à cette requête, le RUNS 3 retourne (étape B de la figure 2) au terminal mobile 4 le titre «RupGetWebURLTitleAnswer» du URL Web associé au URL Radio reçu par le terminal mobile. Ce titre, stocké dans le RUNS 3, correspond à une brève description du service numérique, définie au moment de la création de l'URL Radio. Il est à noter que lorsque cette information est indisponible au niveau du RUNS 3, un message d'erreur est retourné au terminal mobile 4.

A la réception de la brève description d'un service numérique, l'utilisateur peut requérir l'URL Web correspondant (étape C de la figure 2) via la requête « RupGetWebURLRequest».

Le RUNS 3, ainsi sollicité par le terminal mobile 4 au travers la requête « RupGetWebURLRequest», communique à ce dernier une réponse comprenant l'URL Web requise « RupGetWebURLAnswer » (étape D de la figure 2), qui correspond à l'URL Radio reçu par le terminal mobile 4. Il est à noter que lorsque cette information est indisponible au niveau du serveur RUNS, un message d'erreur est retourné au terminal mobile 4.

Selon un mode de réalisation, les échanges décrits ci-dessus entre le terminal mobile 4 et le RUNS 3 s'effectuent en mode circuit sur un canal différent du canal de diffusion initial utilisé pour les notifications.

A l'obtention de l'URL Web, l'utilisateur du terminal mobile 4 peut activer cet URL Web, provoquant, ainsi,
- la commutation en mode paquet du terminal mobile 4 ; et
- le lancement d'un logiciel navigateur lui permettant d'explorer le contenu du site Web du service numérique.

Les requêtes transmises depuis le terminale mobile 4 sont notamment lancées par l'utilisateur via une interface graphique utilisateur du module logiciel qui permet plusieurs types d'interaction tels qu'un clic pour lancer une requête en destination de RUNS 3, ou un clic pour ignorer/activer un URL Radio ou un URL Web.

Il est à noter que la présente invention ne se limite pas à un type particulier de serveur de service numérique 21, 22. Elle s'applique donc notamment aux différents types de serveurs : FTP, http ou https par exemple.

## Revendications

1. Procédé de publication dans un réseau de communications mobiles (1) d'au moins un service numérique disponible sur un réseau Internet (2) et accessible par un URL Web depuis un terminal mobile (4) connecté au dit réseau de communications mobiles (1), ce procédé comprenant les étapes suivantes :
- réception en mode circuit, par le terminal mobile (4), d'un URL Radio, préalablement associé à l'URL Web et qui lui est transmis via le réseau de communications mobiles (1);
- requête, par le terminal mobile (4), de l'URL Web correspondant à l'URL Radio qui lui est transmis;
- réception en mode circuit, par le terminal mobile (4), de l'URL Web qui lui est transmis via le réseau de communications mobiles (1).

2. Procédé selon la revendication 1, **caractérisé en ce qu'**il comprend en outre les étapes suivantes :
- requête par le terminal mobile (4) d'information concernant un URL Radio reçu ;
- réception en mode circuit, par le terminal mobile (4), d'au moins une information qui lui est transmis via le réseau de communications mobiles et concernant l'URL Radio reçu.

3. Procédé selon la revendication 1 ou 2, **caractérisé en ce que** l'URL Radio est compris dans une notification de service numérique.

4. Procédé selon la revendication 3, **caractérisé en ce que** la notification de service numérique est diffusée sur l'interface Radio du réseau de communications mobile (1) selon des paramètres prédéfinis de publications du service numérique.

5. Procédé selon la revendication 4, **caractérisé en ce que** les paramètres de publication définissent les réseaux d'accès radio (12, 13) du réseau de communications mobiles (1) concernés par la publication du service numérique.

6. Procédé selon l'une quelconque des revendications précédentes, **caractérisé en ce que** l'URL Radio est transmis via le canal BCCH.

7. Procédé selon l'une quelconque des revendications 1 à 5, **caractérisé en ce que** l'URL Radio est transmis via les moyens de diffusion cellulaire.

8. Procédé selon l'une quelconque des revendications précédentes, **caractérisé en ce que** l'URL Radio comprend
- un protocole permettant de retrouver l'URL Web correspondant;
- une référence permettant d'identifier d'une manière unique l'URL Web associé.

9. Procédé selon la revendication 8, **caractérisé en ce que** la référence comprend
- la longueur de la référence;
- un identifiant permettant d'identifier d'une manière unique l'URL Web correspondant.

10. Système de publication dans un réseau de communications mobiles (1) d'au moins un service numérique disponible sur un réseau Internet (2) et accessible par un URL Web depuis un terminal mobile (4) connecté au dit réseau de communications mobiles (1), ce système comprenant:
- un serveur (3) d'association d'un URL Radio à l'URL Web du service numérique;
- des moyens de transmission en mode circuit, au terminal mobile (4), de l'URL Radio;
- des moyens de transmission en mode circuit, de l'URL Web requis par un terminal mobile qui a reçu l'URL Radio associé.

11. Système selon la revendication 10, **caractérisé en ce que** le serveur (3) d'association comprend des informations concernant le service numérique associé à l'URL Radio, transmis au terminal mobile (4).

12. Un terminal mobile (4) comprenant
- des moyens de réception en mode circuit d'un URL Radio qui lui est transmis via un réseau de communications mobiles (1);
- des moyens de requête d'un URL Web correspondant à l'URL Radio reçu;
- des moyens de réception en mode circuit d'un URL Web requis.

13. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 9.
